# EUROPEAN PATENT APPLICATION

(11) **EP 1 484 530 A1**
(43) Date of publication of application: **08.12.2004**
(21) Application number: 03425312.0
(22) Date of filing: 15.05.2003
(51) Int. Cl.: F16G 13/04

(54) **Silent chain adapted to be tensioned from the inside**

(71) Applicant: Morse Tec Europe S.r.l., 20043 Arcore, Milano (IT)
(72) Inventor: Frigerio, Mirko, 20059 Vimercate (Milano) (IT); Covini, Lorenzo, 20121 Milano (IT)
(74) Representative: Coggi, Giorgio

(57) **Abstract**

A silent chain (1) adapted to be tensioned from the inside is disclosed, which comprises a plurality of groups of links (6) assembled by means of pins (8) connected to guide plates (9, 9') - positioned on both sides of the chain (1) - which protrude with respect to the links (6) of the chain (1) at least on the inner surface of said chain.

## Description

The present invention refers to a silent chain adapted to be tensioned from the inside.

In particular, reference will be made to a silent chain belonging to chain drive means for motor vehicles.

A timing system of an internal combustion engine can be controlled by means of a chain drive wherein the chain is wound on two or more sprockets, whereof one is a driving sprocket and takes its movement from the driving shaft to transmit it to the camshaft.

Since, for reasons of adjustment, wear on materials and/or take up of play, it is necessary to compensate for a certain slack on the chain, use is known of tensioning devices wherein a tensioning arm is biased with an adjustable force against a branch of the chain.

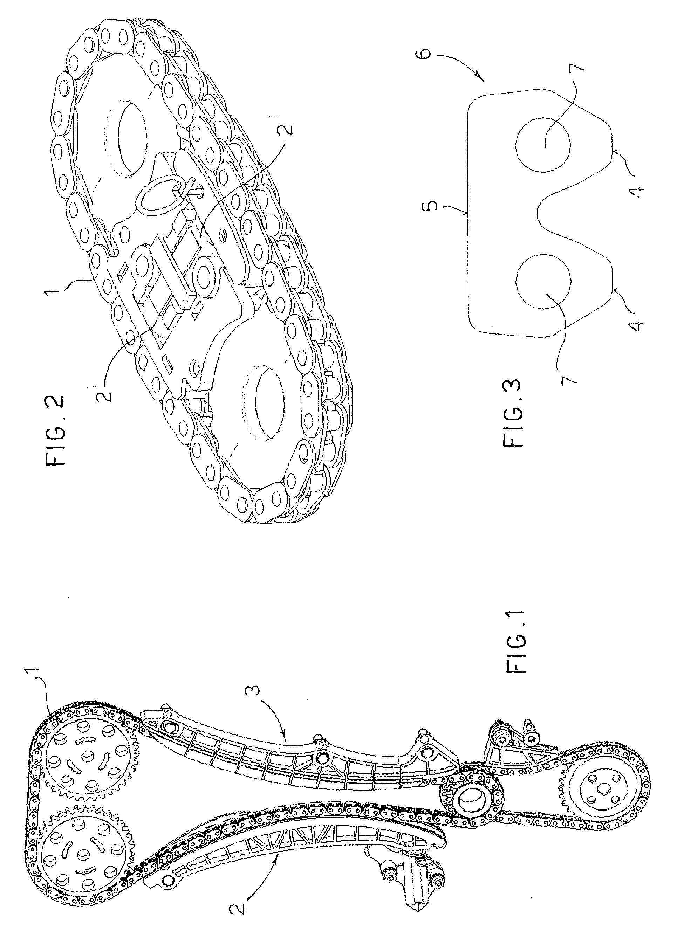

Figure 1 shows diagrammatically a device of the prior art, wherein the chain 1 is guided by at least one guide 3 and tensioned by at least one tensioning arm 2 placed on the outside of the chain 1; the chain 1 can be a conventional chain (whose links are substantially elliptical in shape and in any case symmetrical with respect to the longitudinal axis of the link) or a silent chain, whose links 6 (one of which is illustrated diagrammatically in Figure 3) have on one side - corresponding to the outer surface of the chain 1 - a practically flat surface 5 whilst on the other side - corresponding to the inner surface of the chain 1 - they have a surface with a shape complementary to that of the teeth of the drive sprocket and of the transmission sprocket of the timing system, which comprises a pair of chamfered protuberances wherein said teeth engage.

If the chain 1 is a silent chain, the at least one tensioning arm 2 and at least one guide 3, positioned on the outside of the chain 1, act on the practically flat outer surface 5 of the links 6 without damaging them.

Figure 2 shows diagrammatically a device of the prior art, wherein the chain 1, not silent, is tensioned by a pair of tensioning arms 2' positioned on the inside of the chain 1.

If the chain 1 were a silent chain of the conventional type, the tensioning arms 2' (and the possible guides) would act on the chamfered protuberances 4 of the inner surface of the chain 1, wearing them and thus damaging the links 6.

For this reason timing systems - like that illustrated in Figure 2 - comprising a silent chain tensioned by tensioning arms positioned on the inside of the chain itself have not yet been made (at least on an industrial scale), although said type of timing system is - or can be - advantageous since it is smaller in size than corresponding timing systems - like that illustrated diagrammatically in Figure 1 - comprising a silent chain tensioned by tensioning arms positioned on the outside of said chain.

The object of the invention is to provide a silent chain that is simple and cheap to produce and is able to be tensioned by tensioning arms positioned on the inside of the chain itself.

This object is achieved by a silent chain made according to the invention, which has the characteristics of appended independent claim 1; preferred embodiments of the invention are apparent from the dependent claims.

Essentially, the links of the silent chain made according to the invention are assembled by means of pins connected to guide plates positioned at both sides of the chain, which protrude with respect to the links of the chain at least on the inner surface of the chain.

Further characteristics of the invention will be made clearer by the detailed description that follows, referring to purely exemplary and therefore non-limiting embodiments thereof, illustrated in the appended drawings, in which:
- Figure 1 shows diagrammatically a timing system of the prior art wherein a chain of the prior art is tensioned from the outside;
- Figure 2 shows diagrammatically a timing system of the prior art wherein a non-silent chain is tensioned from the inside;
- Figure 3 shows diagrammatically a front view of a link of a silent chain;
- Figure 4 shows diagrammatically a perspective view of the outside surface of a portion of a first embodiment of a silent chain made according to the invention;
- Figure 5 shows diagrammatically a perspective view of the inside surface of the portion of silent chain shown in Figure 4;
- Figure 6 shows diagrammatically a perspective view of the outside surface of a portion of a second embodiment of a silent chain made according to the invention;
- Figure 7 shows diagrammatically a perspective view of the inside surface of a portion of silent chain shown in Figure 6.

In the appended figures, corresponding elements are indicated by the same reference numerals.

Figure 1 shows diagrammatically a timing system of the prior art, wherein the chain 1 is supported by at least one guide 3 and tensioned by at least one tensioning arm 2 positioned on the outside of the chain 1; Figure 2 shows diagrammatically a timing system of the prior art wherein the chain 1, not silent, is tensioned by a pair of tensioning arms 2' positioned on the inside of the chain 1.

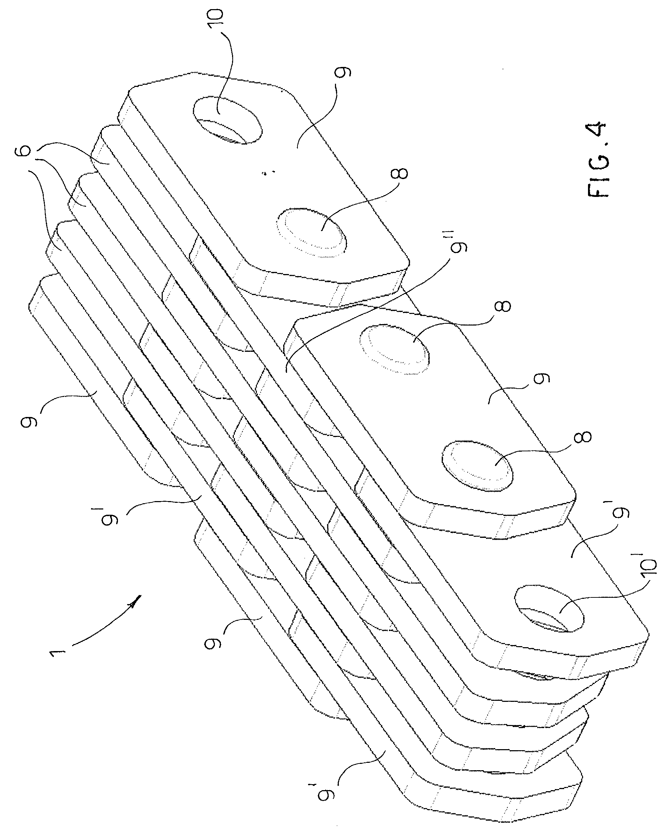

Figure 3 shows diagrammatically a front view of a link 6 of a silent chain, per se known; in Figure 3 there can be seen the practically flat surface 5, the chamfered protuberances 4 wherewith the teeth of the drive sprocket and of the transmission sprocket of the timing system engage and a pair of holes 7 wherein the pins 8 (Figures 4-7) having a smaller diameter than that of the holes 7 are inserted.

Figure 4 shows diagrammatically a perspective view of the outer surface of a portion of a silent chain 1 made according to a first embodiment of the invention.

A silent chain 1 made according to the invention comprises groups of links 6 and guide plates (9, 9') placed on two rows - offset from each other - on each side of the chain 1, which protrude with respect to the links 6 of the chain 1 at least level with the inside surface of the chain 1 where the chamfered protuberances 4 are present.

A silent chain 1 made according to the invention is adapted to be tensioned from the inside by positioning the tensioning arms 2 (and the guides 3) on the inside of the chain 1, since the tensioning arms 2 (and the guides 3) rest on the surfaces of the guide plates (9, 9') which protrude with respect to the chamfered protuberances 4 of the links 6, without touching (nor, consequently, damaging) the chamfered protuberances 4.

The silent chain 1 is assembled by means of the pins 8 connected to the guide plates 9 belonging to the outer row, which have a pair of holes 10 with a diameter no greater than that of the pins 8 which are therefore locked in the holes 10; the guide plates 9' belonging to the inner row and the links 6 have a pair of holes (10', 7 respectively) with a greater diameter than that of the pins 8 to allow the guide plates 9' and the links 6 to rotate around the pins 8.

The guide plates (9, 9') are advantageously symmetrical with respect to an axis passing through the centres of the holes (10, 10') so as to be able to be applied on both sides of the chain 1, simplifying procurement and assembly of the guide plates (9, 9') and of the chain 1 and consequently reducing production costs for the silent chain 1 to which the present invention refers.

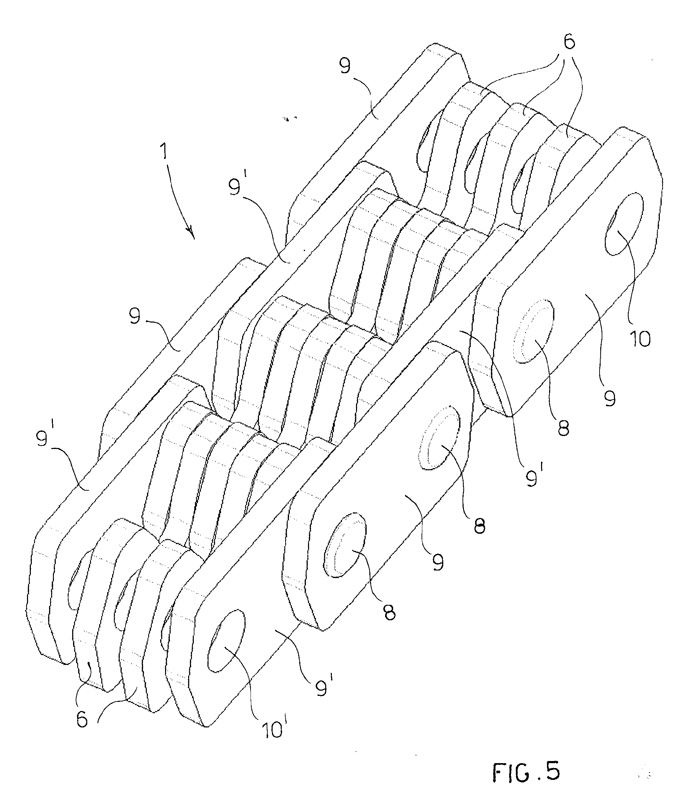

Figure 5 shows diagrammatically a perspective view of the inner surface of the portion of silent chain shown in Figure 4.

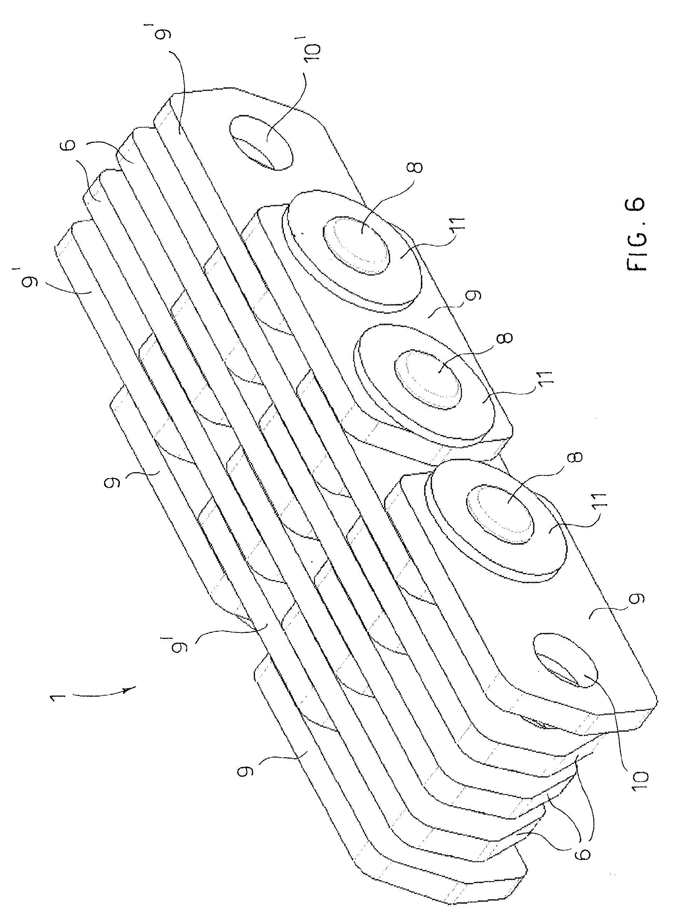

Figure 6 shows diagrammatically a perspective view of a portion of a silent chain made according to a second embodiment of the invention, which differs from that made according to the first embodiment essentially in that the ends of the pins 8 protrude from the guide plates 9 of the outer row and in that each end of a pin 8 is blocked by a washer 11.

Consequently, the guide plates (9, 9') of the two rows are the same as each other and have like pairs of holes (10, 10') having a greater diameter than that of the corresponding pin 8, which is free to rotate in the holes (10, 10') reducing wear on the guide plates (9, 9'), of the links 6 of said pin.

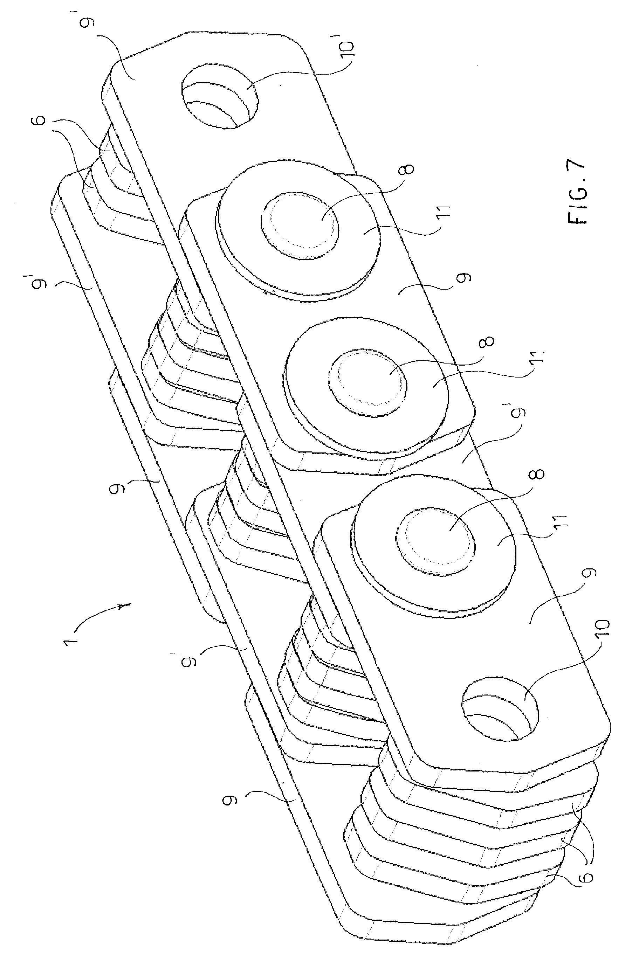

Figure 7 shows diagrammatically a perspective view of the inside surface of the portion of silent chain shown in Figure 6.

The guide plates (9, 9') of a silent chain 1 made according to the second embodiment of the invention are advantageously symmetrical with respect to an axis passing through the centres of their hoes (10, 10') so as to be able to be applied on both sides of the chain 1, simplifying procurement and assembly of the guide plates (9, 9') and of the chain 1 and consequently reducing production costs of the silent chain of the present invention.

Without departing from the scope of the invention, a person skilled in the art can make all the modifications and improvements to the silent chain according to the present description suggested by his experience and the natural evolution of the art.

## Claims

1. A silent chain adapted to be tensioned from the inside, comprising a plurality of groups of links (6) assembled by means of pins (8) connected to guide plates (9, 9') positioned on both sides of the chain (1) **characterised in that** the guide plates (9, 9') protrude with respect to the links (6) of the chain (1) at least on the inner surface of the chain (1).

2. A silent chain as claimed in claim 1, **characterised in that** the guide plates (9, 9') are disposed on two rows offset with respect to each other.

3. A silent chain as claimed in claim 2, **characterised in that** the guide plates (9) belonging to the outer row have a pair of holes (10) with a diameter no greater than that of the pins (8) and **in that** the guide plates (9') belonging to the inner row and the links (6) have a pair of holes (10', 7, respectively) with a diameter no smaller than that of the pins (8).

4. A silent chain as claimed in claim 2, **characterised in that** the ends of the pins (8) protrude from the guide plates (9) of the outer row and **in that** each end of a pin (8) is blocked by a washer (11).

5. A silent chain as claimed in claim 4, **characterised in that** the guide plates (9, 9') of the two rows are the same as each other and have pairs of like holes (10, 10') having a greater diameter than that of the corresponding pin (8).

6. A silent chain as claimed in claim 2, **characterised in that** the guide plates (9, 9') are symmetrical with respect to an axis passing through the centres of their holes (10, 10').

## Amended claims

### Amended claims in accordance with Rule 86(2) EPC.

**1.** A silent chain adapted to be tensioned from the inside, comprising a plurality of groups of links (6) assembled by means of pins (8) connected to guide plates (9, 9') which are positioned on both sides of the chain (1), are disposed on two rows offset with respect to each other and protrude with respect to the links (6) of the chain (1) at least on the inner surface of the chain (1), **characterised in that** the ends of the pins (8) protrudes from the guide plates (9) belonging to the outer row of the guide plates (9, 9') and **in that** each end of a pin (8) is blocked by a washer (11).

**2.** A silent chain as claimed in claim 1, **characterised in that** the guide plates (9) belonging to the outer row have a pair of holes (10) with a diameter no greater than that of the pins (8) and **in that** the guide plates (9') belonging to the inner row and the links (6) have a pair of holes (10', 7, respectively) with a diameter no smaller than that of the pins (8).

**3.** A silent chain as claimed in claim 1, **characterised in that** the guide plates (9, 9') of the two rows are the same as each other and have pairs of like holes (10, 10') having a greater diameter than that of the corresponding pin (8).

**4.** A silent chain as claimed in claim 1, **characterised in that** the guide plates (9, 9') are symmetrical with respect to an axis passing through the centres of their holes (10, 10').
